# EUROPEAN PATENT SPECIFICATION

(11) **EP 3 709 418 B1**
(45) Date of publication and mention of the grant of the patent: **01.06.2022**
(21) Application number: 17882289.6
(22) Date of filing: 06.11.2017
(51) Int. Cl.: H01M 8/04007, H01M 8/2475, H01M 8/18

(54) **REDOX FLOW BATTERY**
REDOX-FLOW-BATTERIE
BATTERIE À FLUX RÉDOX

(43) Date of publication of application: 16.09.2020
(73) Proprietor: Sumitomo Electric Industries, Ltd., Osaka-shi, Osaka 541-0041 (JP)
(72) Inventor: IKEUCHI, Atsuo, Osaka-shi Osaka 541-0041 (JP); HAYASHI, Kiyoaki, Osaka-shi Osaka 541-0041 (JP)
(74) Representative: Boult Wade Tennant LLP
(86) International application number: PCT/JP2017/039869
(87) International publication number: WO 2019/087377

(56) References cited:
- JP-A- S60 167 283
- JP-A- 2002 053 228
- JP-A- 2012 505 629
- JP-A- 2017 107 859
- US-B1- 8 974 940
- US-B1- 9 276 266
- Toshikazu Shibata: "Development and demonstration of redox flow battery system", Open Symposium of the Institute of Electrical Engineers of Japan. Hokkaido University Academic Exchange Center Sumitomo Electric Industries, Ltd., 11 December 2017 (2017-12-11), pages 1-44, XP055607543, Retrieved from the Internet: URL:http://www.iee.jp/wp-content/uploads/h onbu/03-conference/data-31/symp_161212/doc 03.pdf
- Sumitomo Electric Industries,ltd: "REDOX FLOW BATTERY", The Energy Solution by Sumitomo Electric Group, 11 December 2017 (2017-12-11), pages 1-18, XP055607573, Retrieved from the Internet: URL:http://www.sei.co.jp/products/redox/pd f/redox-flow-battery.pdf

## Description

### Technical Field

The present invention relates to a redox flow battery.

### Background Art

Redox flow batteries (hereinafter, may be referred to as "RF batteries") are one of large-capacity storage batteries. As illustrated in Fig. 7 of PTL 1, an RF battery includes a battery cell, a positive electrolyte tank that stores a positive electrolyte, a negative electrolyte tank that stores a negative electrolyte, the electrolytes being supplied to the battery cell, and pipes (ducts) which are connected to the battery cell and the tanks and through which the electrolytes of the corresponding electrodes flow. PTL 1 discloses an embodiment that includes a plurality of cell stacks each of which includes a plurality of stacked battery cells. US9276266B1 relates to a perforated electrode plate. Toshikazu Shibata, Open Symposium of the Institute of Electrical Engineers of Japan. Hokkaido University Academic Exchange Center Sumitomo Electric Industries, Ltd., (20171211), pages 1 - 44 relates to the development and demonstration of a redox flow battery system. JPS60167283A relates to an electric power unit and electric power device.

### Citation List

### Patent Literature

PTL 1: Japanese Unexamined Patent Application Publication No. 2003-036880

### Summary of Invention

A redox flow battery of the present disclosure is according to claim 1.

### Brief Description of Drawings

[Fig. 1] Figure 1 is a schematic diagram illustrating an overall configuration of a redox flow battery of Embodiment 1.
[Fig. 2] Figure 2 is a schematic sectional view illustrating an example of a cell stack included in a redox flow battery of Embodiment 1.
[Fig. 3] Figure 3 is a schematic view illustrating a configuration of an example of a cell stack included in a redox flow battery of Embodiment 1.
[Fig. 4] Figure 4 is a longitudinal sectional view of a redox flow battery of Embodiment 2 when the redox flow battery is cut in a plane orthogonal to a width direction of a container.
[Fig. 5] Figure 5 is a horizontal sectional view of a redox flow battery of Embodiment 2 when the redox flow battery is cut in a plane orthogonal to a height direction of a container.
[Fig. 6] Figure 6 is an explanatory view illustrating a weight balance in a longitudinal section in a redox flow battery of Embodiment 2.
[Fig. 7] Figure 7 is an explanatory view illustrating a weight balance in a horizontal section in a redox flow battery of Embodiment 2.
[Fig. 8] Figure 8 is an explanatory view illustrating a state in which a container is suspended.

### Description of Embodiments

### [Technical Problem]

It is desirable for large redox flow batteries (RF batteries) including a plurality of cell stacks to have a good heat dissipation performance in addition to good assembly workability.

As described in PTL 1, in the case where a plurality of cell stacks are provided, a so-called vertical stacking, in which the cell stacks are stacked in the up-down direction (gravity direction), easily realizes a reduction in the installation space of the cell stacks that are vertically stacked. However, the vertical stacking requires a strong base in order to stably support the cell stacks, which are heavy objects. The number of members constituting the base tends to increase, which may easily result in an increase in the time taken for assembling the base. Since heavy objects such as steel materials are used for the members constituting the base, it is desirable to reduce the number of the members used so as to reduce the burden on the worker. Thus, regarding RF batteries, it is desirable to improve assembly workability including the assembly of the base. RF batteries that are more easily assembled are desired from the viewpoint that, in order to meet the requirements for higher-output batteries and larger-capacity batteries, the weights of each cell stack, tanks, etc. tend to increase due to, for example, an increase in the number of stacking battery cells used in each cell stack, an increase in the size of electrodes, and an increase in the size of tanks due to an increase in the amount of electrolytes.

In RF batteries, the temperatures of electrolytes are increased by generation of heat accompanied by a battery reaction. This temperature increase may result in, for example, degradation of components of the RF batteries and degradation of the electrolytes. When an RF battery includes a plurality of cell stacks, an increase in the temperatures of electrolytes occurs in each of the cell stacks, and thus it is desirable to cool the electrolytes. For example, it is conceivable to provide heat exchange mechanisms on pipes. However, when a plurality of cell stacks are vertically stacked as described above, the pipes connected to each of the cell stacks also tend to have portions arranged in the up-down direction. Consequently, the pipes tend to have long lengths, resulting in an increase in the installation space of the pipes. A large installation space of the pipes tends to decrease the installation space of the heat exchange mechanisms, which easily results in a decrease in the heat dissipation efficiency. Thus, it is desirable to provide an RF battery having a good heat dissipation performance and including even a plurality of cell stacks.

Accordingly, it is an object to provide a redox flow battery having a good heat dissipation performance in addition to good assembly workability.

### [Advantageous Effects of the Present Disclosure]

A redox flow battery of the present disclosure has a good heat dissipation performance in addition to good assembly workability.

### [Description of Embodiments of the Present Invention]

First, embodiments of the present invention will be listed and described.

(1) A redox flow battery (RF battery) according to an embodiment of the present invention is according to claim 1.

While the RF battery includes a plurality of cell stacks and a heat exchanger, the RF battery has a particular arrangement in which the cell stacks are arranged side by side and the heat exchanger is disposed above a stack group. Therefore, in the RF battery, the number of members used for constituting a base is easily reduced compared with the case of vertical stacking. In addition, since the cell stacks, which are heavy objects, are arranged below the heat exchanger, the degree of reinforcement of the base is easily decreased, and the number of members used for constituting the base is easily reduced compared with the case of the reverse arrangement. Therefore, according to the RF battery, the time taken for assembling the base can be reduced, and the burden on the worker can also be reduced. In particular, the RF battery may have a form in which an electrolyte from a tank is allowed to flow from a lower part of each of the cell stacks toward an upper part thereof and returned to the tank (hereinafter, may be referred to as a "rising form") and include the heat exchanger on a pipe of a return path. With this configuration, an exhaust valve can be omitted to easily make the pipe structure simple (the details will be described later), and the time taken for assembling the pipe can also be reduced. Accordingly, the RF battery has good assembly workability while including a plurality of cell stacks.

In addition, the RF battery includes a heat exchanger and can efficiently cool an electrolyte with the heat exchanger, and thus the RF battery also has a good heat dissipation performance. In particular, in the RF battery, a space above the stack group, which is horizontally arranged, functions as a region where the heat exchanger is disposed. This configuration easily secures a wide installation space of the heat exchanger. Also from the viewpoint of easily reducing the length of the pipe compared with the case where the cell stacks are vertically stacked, a wide installation space of the heat exchanger is easily secured. The RF battery having such a configuration can include a large heat exchanger to easily enhance the heat dissipation efficiency and has a better heat dissipation performance. The RF battery having the above-described rising form and including the heat exchanger on a pipe of a return path enables an electrolyte to be efficiently cooled to realize a better heat dissipation performance (the details will be described later). Furthermore, when a planar area of the heat exchanger is made equal to or less than a virtual planar area of the stack group, a good heat dissipation performance is achieved without causing an increase in the installation space due to the arrangement of the heat exchanger.

(2) The RF battery includes
a container that collectively houses the stack group, the heat exchanger, a tank that stores the electrolyte, and a pipe which is connected to each of the cell stacks and the tank and through which the electrolyte flows.

In the above embodiment, components such as a stack group, a heat exchanger, a tank, and a pipe are collectively housed in a vessel such as a container. Accordingly, the components can be assembled in advance in a place where a large working space is easily secured, such as a factory, to realize better assembly workability. Furthermore, when the components are transported to an installation location of the RF battery in a state where the components are assembled, the operation in the installation site can be significantly reduced, and the burden on the worker can also be reduced.

In addition, according to the above embodiment, while the stack group is collectively housed in the container, the heat exchanger is provided above the stack group. Thus, a good heat dissipation performance is achieved as described above. Since a plurality of cell stacks are arranged side by side, a relatively large flow space of the air is easily secured compared with the case of the vertical stacking, and it is expected that the pipe is easily air-cooled by a flow of the air. This configuration also provides a good heat dissipation performance.

(3) According to the embodiment of the RF battery
the container includes a cell chamber that houses the stack group, the heat exchanger, and the pipe and a tank chamber that houses the tank, the cell chamber and the tank chamber being arranged side by side in a longitudinal direction of the container.

In the above embodiment, a part of the container on one end side in the longitudinal direction functions as a cell chamber, a part of the container on the other end side functions as a tank chamber, and the stack group, the heat exchanger, and the pipe are housed together in the cell chamber. Therefore, the pipe is easily shortened, and the arrangement structure is easily made simple compared with a form in which, for example, the stack group is disposed on one end side, the heat exchanger is disposed on the other end side with the tank therebetween (hereinafter, may be referred to as a "tank interposition form"). Accordingly, the above form more easily reduces the time taken for assembling the pipe and achieves better assembly workability. In addition, according to the above form, due to the short length of the pipe, a large installation space of the heat exchanger is easily secured as described above, and the electrolyte can be easily rapidly introduced into the heat exchanger to efficiently cool the electrolyte. This configuration also provides a good heat dissipation performance. In particular, when the RF battery has the rising form and includes the heat exchanger on a pipe of a return path, an electrolyte at a high temperature can be rapidly introduced into the heat exchanger and more efficiently cooled compared with the tank interposition form.

(4) According to the embodiment of the RF battery,
a length of the tank chamber is longer than a length of the cell chamber,
a center of the container in the longitudinal direction and a height direction is denoted by P, a center of the container in the longitudinal direction and a width direction is denoted by Q, a length of the container is denoted by L, a width of the container is denoted by W, and a center of gravity of the container is denoted by G,
a distance x from the center P to the center of gravity G satisfies x ≤ (1/3) × L on a longitudinal section of the container in a state in which the stack group, the heat exchanger, the tank, and the pipe are housed, and a distance y from the center Q to the center of gravity G satisfies y ≤ (1/20) × W on a horizontal section of the container.

According to the above embodiment, when the container that has housed components such as the stack group is transported on land by a vehicle such as a truck, the vehicle can travel stably. In addition, when the container is lifted by a crane or the like in order to install the container on an installation location, the container can be stably lifted. Accordingly, the above embodiment also provides good transportation workability and good installation workability.

### [Details of Embodiments of the Present Invention]

Hereafter, redox flow batteries (RF batteries) according to embodiments of the present invention will be specifically described with reference to the drawings. In the drawings, the same reference signs denote the same components.

### [Embodiment 1] - Reference Example

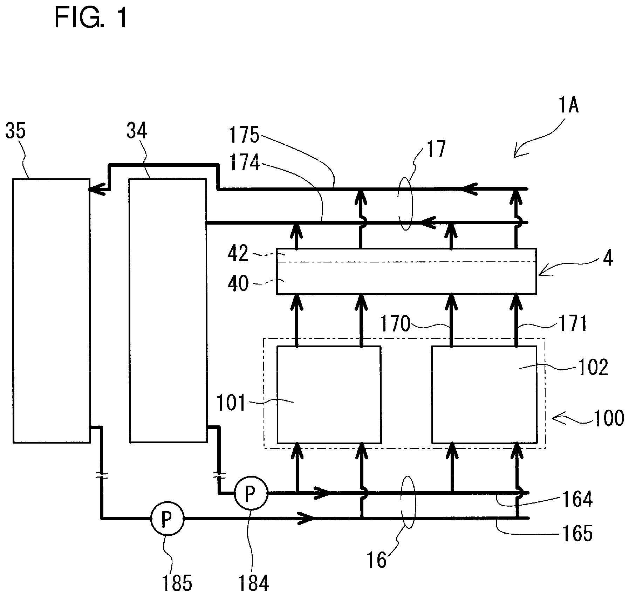

Hereafter, an RF battery 1A of Embodiment 1 will be described mainly with reference to Figs. 1 to 3.

### (Basic Configuration)

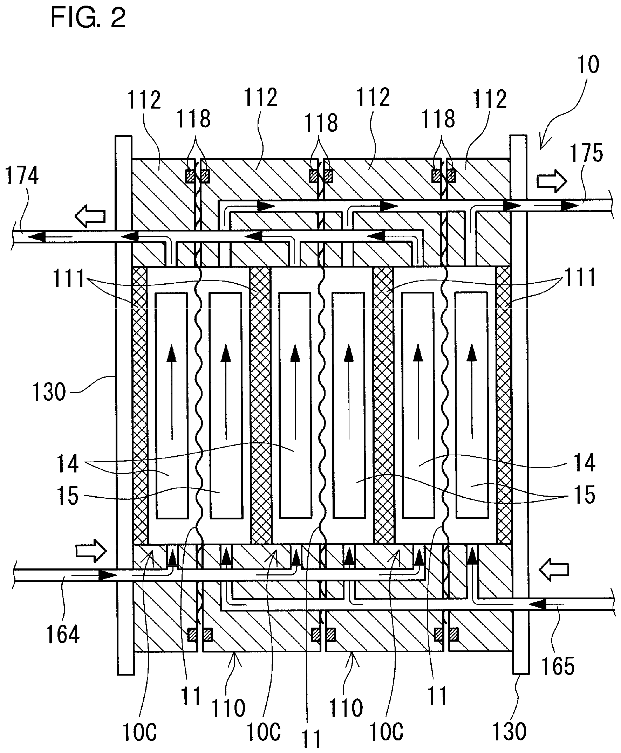

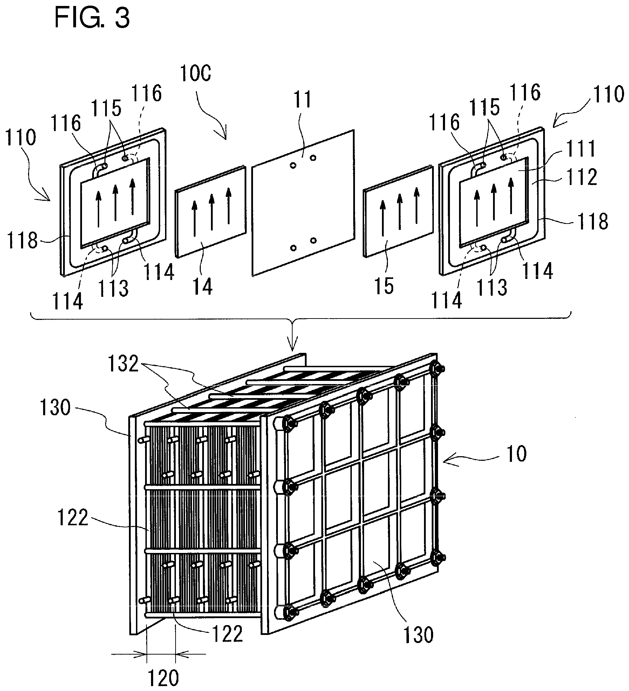

The RF battery 1A of Embodiment 1 incudes a stack group 100 including a plurality of cell stacks, and a supply mechanism that supplies and circulates electrolytes to each of the cell stacks. Figure 1 illustrates an example of a case where the stack group 100 includes two cell stacks 101 and 102. The cell stacks 101 and 102 are each obtained by stacking a plurality of battery cells 10C, as illustrated in Figs. 2 and 3. Hereinafter, the cell stacks 101 and 102 may be referred to as a cell stack 10 as a representative.

The supply mechanism includes a positive electrolyte tank 34 that stores a positive electrolyte and a negative electrolyte tank 35 that stores a negative electrolyte, the electrolytes being supplied to each cell stack 10, and pipes 16 and 17 which are connected to the cell stack 10 and the tanks 34 and 35 and through which the electrolytes flow.

Such an RF battery 1A is typically connected to a power generation unit and a load through an alternating current/direct current converter, performs charging using the power generation unit as a power supply source, and performs discharging to the load as a power supply target (these are not illustrated in the figures). Examples of the power generation unit include solar power generation apparatuses, wind power generation apparatuses, and other ordinary power plants. Examples of the load include consumers. Charging and discharging are performed by using a positive electrolyte and a negative electrolyte, each containing, as an active material, ions (typically metal ions) whose valence is changed by oxidation-reduction and using the difference in oxidation-reduction potential between positive ions and negative ions.

In particular, the RF battery 1A of Embodiment 1 includes the stack group 100 including the plurality of cell stacks 10 that are arranged side by side in a horizontal direction (left-right direction in Fig. 1) and, above the stack group 100, a heat exchanger 4 that cools electrolytes supplied to each of the cell stacks 10. This RF battery 1A is easily assembled and has a good heat dissipation performance while including the plurality of cell stacks 10. Hereafter, each of the components will be described in detail.

### (Battery Cell)

As illustrated in Figs. 2 and 3, the battery cell 10C includes a positive electrode 14 to which a positive electrolyte is supplied, a negative electrode 15 to which a negative electrolyte is supplied, and a membrane 11 disposed between the positive electrode 14 and the negative electrode 15.

The positive electrode 14 and the negative electrode 15 are reaction sites to which the positive electrolyte and the negative electrolyte are respectively supplied and in which an active material causes a battery reaction. For example, a porous body, such as a fiber aggregate of a carbon material, is used.

The membrane 11 is a member that separates the positive electrode 14 and the negative electrode 15 from each other and that allows specific ions (for example, hydrogen ions) to permeate therethrough. An ion-exchange membrane or the like is used.

The battery cell 10C is typically constructed by using a cell frame 110 illustrated in Fig. 3 as an example. The cell frame 110 includes a bipolar plate 111 and a frame body 112 provided on the periphery of the bipolar plate 111.

Typically, a positive electrode 14 is disposed on one surface of the bipolar plate 111, and a negative electrode 15 is disposed on the other surface of the bipolar plate 111. The bipolar plate 111 is a conductive member that conducts an electric current but does not allow electrolytes to flow therethrough. For example, a conductive plastic plate containing graphite or the like and an organic material is used as the bipolar plate 111.

The frame body 112 is an insulating member having liquid supply holes 113 and slits 114 through which the positive electrolyte and the negative electrolyte are respectively supplied to the positive electrode 14 and the negative electrode 15 disposed in the frame, and liquid discharge holes 115 and slits 116 through which the positive electrolyte and the negative electrolyte are respectively discharged to the outside of the battery cell 10C. As the constituent material of the frame body 112, for example, a resin (for example, polyvinyl chloride or polyethylene) that does not react with electrolytes and has resistance to electrolytes is used. A ring-shaped groove is provided in a region close to the outer periphery of the frame body 112, and a sealing member 118 is disposed in the groove. An elastic member such as an O-ring or a flat packing is used as the sealing member 118.

The cell stack 10 typically includes a layered body in which a cell frame 110 (bipolar plate 111), a positive electrode 14, a membrane 11, and a negative electrode 15 are stacked in this order a plurality of times, a pair of end plates 130 that sandwich the layered body, and a plurality of fastening members 132 that fasten between the two end plates 130. The stacked state is maintained by the fastening force acting in the stacking direction. In addition, the fastening force squeezes the sealing member 118 disposed between adjacent frame bodies 112 to maintain the layered body in a fluid-tight manner (also refer to Fig. 2) so as to prevent leakage of electrolytes from the cell stack 10. The number of the battery cells 10C (number of cells) in the cell stack 10 can be appropriately selected. The specifications (such as the size of electrodes and the number of cells) of the cell stack 10 can be appropriately selected so as to achieve desired characteristics. A larger number of the cells and a larger size of the electrodes easily provide higher-output batteries.

Furthermore, as illustrated in Fig. 3 as an example, the cell stack 10 may be an assembly in which a plurality of sub-cell stacks 120 are stacked, the sub-cell stacks 120 each being a layered body including a predetermined number of the cells. The sub-cell stacks 120 may each include supply/discharge plates 122 for electrolytes.

### (Circulation Mechanism)

A circulation mechanism includes a positive electrolyte tank 34 (Fig. 1) that stores a positive electrolyte to be supplied and circulated to a positive electrode 14, a negative electrolyte tank 35 (the same) that stores a negative electrolyte to be supplied and circulated to a negative electrode 15, pipes 164 and 174 (Figs. 1 and 2) that connect the positive electrolyte tank 34 to each of cell stacks 10, pipes 165 and 175 (the same) that connect the negative electrolyte tank 35 to each of the cell stacks 10, and a pump 184 for the positive electrode and a pump 185 for the negative electrode (Fig. 1) that are respectively provided on the pipes 164 and 165 functioning as outward paths for supplying from the tanks 34 and 35 to each of the cell stacks 10. The pipes 164 and 165 functioning as the outward paths, and the pipes 174 and 175 functioning as return paths for returning from each of the cell stacks 10 to the tanks 34 and 35 are each connected to a pipe formed by the liquid supply hole 113 and the liquid discharge hole 115 to form a circulation path of the positive electrolyte and a circulation path of the negative electrolyte.

Examples of the constituent material of the pipes 16 and 17 include the above-mentioned resins that do not react with electrolytes and have resistance to electrolytes.

Known pumps can be appropriately used as the pumps 184 and 185.

Each of the tanks 34 and 35 is a box-like vessel that stores the electrolyte, and a vessel having a suitable shape can be used. The amount of storage is appropriately selected in accordance with, for example, the volume of the stack group 100. Examples of the constituent material of the tank 3 include the above-mentioned resins and rubbers that do not react with electrolytes and have resistance to electrolytes.

Examples of the electrolytes that can be used include electrolytes containing vanadium ions as positive and negative active materials (PTL 1), electrolytes containing manganese ions as a positive active material and titanium ions as a negative active material, and other electrolytes having known compositions.

An example of the circulation path of the positive electrolyte and the circulation path of the negative electrolyte is a rising form in which the electrolytes from the tanks 34 and 35 are caused to flow from a lower part of each of the cell stacks 10 toward an upper part thereof and returned to the tanks 34 and 35. The rising form is preferable because electrolytes easily diffuse over the entire region of electrodes, and battery characteristics can be easily enhanced from this respect. The cell frame 110 illustrated in Fig. 3 includes the liquid supply holes 113 on a lower part and the liquid discharge holes 115 on an upper part and thus can be suitably used in the rising form.

### (Stack Group)

The RF battery 1A includes the plurality of cell stacks 10 described above, and these cell stacks 10 are arranged side by side in the horizontal direction. Typically, an example thereof is a form in which a plurality of cell stacks 10 are arranged side by side in a row to be flush with each other, that is, a form in which the stack group 100 has a rectangular parallelepiped shape. The cell stacks 10 need not be necessarily arranged in a single row as long as the plurality of cell stacks 10 are placed to be flush with each other. For example, a stack group 100 including four cell stacks 10 may have a form in which the cell stacks 10 are arranged in a square shape of 2 × 2.

The cell stacks 10 that constitute the stack group 100 are electrically connected in series and/or in parallel.

The stack group 100 typically has a form in which the cell stacks 10 that constitute the stack group 100 have the same specifications such as the size of electrodes, the number of cells, and the like. The stack group 100 may have a form in which, for example, the stack group 100 includes the cell stacks 10 having different numbers of cells.

### (Heat Exchanger)

The heat exchanger 4 is a member that is provided on at least one of the pipe 16 of an outward path and the pipe 17 of a return path in the circulation mechanism described above and that changes the temperature of an electrolyte, typically, that cools an electrolyte (Fig. 1). The heat exchanger 4 includes a pipe accumulation part 40 into which an electrolyte at a temperature T₀ is introduced and from which the electrolyte whose temperature is changed from the temperature T₀ to a temperature T₁ is discharged. The heat exchanger 4 that conducts forced cooling further includes a cooling mechanism 42.

The pipe accumulation part 40 typically includes a positive electrode pipe through which a positive electrolyte flows and a negative electrode pipe through which a negative electrolyte flows and is constituted in order to secure a large surface area by, for example, using the pipes having a relatively small diameter, arranging the pipes in a meandering manner, or spirally winding the pipes. Examples of a form of the heat exchanger 4 include a form that includes both a positive electrode pipe and a negative electrode pipe as the pipe accumulation part 40, a form that includes only a positive electrode pipe as the pipe accumulation part 40, and a form that includes only a negative electrode pipe as the pipe accumulation part 40. The RF battery 1A may have a package form (Fig. 1) which includes a heat exchanger 4 including both the positive electrode pipe and the negative electrode pipe together or an independent form (not illustrated) which includes a heat exchanger 4 including only the positive electrode pipe and a heat exchanger 4 including only the negative electrode pipe.

In the package form, for example, the heat exchanger 4 may have a configuration in which the positive electrode pipe and the negative electrode pipe are housed in a single case, and the cooling mechanism 42 is used in common. This configuration enables the number of members to be reduced and provides good assembly workability of the heat exchanger 4. In the case where a plurality of cooling mechanisms 42 are provided, the cooling performance can be enhanced.

In the independent form, it is easy to vary the specifications (such as the length of the pipe, the presence or absence of the cooling mechanism 42, and the specification of the cooling mechanism 42) of the heat exchangers 4. Accordingly, when the temperature of the positive electrolyte and the temperature of the negative electrolyte are different from each other, the cooling mechanism 42 can be controlled in accordance with each of the temperatures. Thus, it is easy to cool the electrolytes to more appropriate temperatures.

Examples of the cooling method include natural cooling and forced cooling. When forced cooling is performed, for example, a fan (forced air cooling) or a flowing mechanism (forced water cooling) through which a cooling medium flows is preferably provided as the cooling mechanism 42. Figure 1 virtually illustrates, by using the two-dot chain lines, the above-described package form in which the cooling mechanism 42 is used in common. Note that an electrolyte can be heated by allowing a heating medium such as hot water to flow through the flowing mechanism, as required.

The heat exchanger 4 is preferably provided on the pipe 17 serving as the return path, and more preferably provided in the vicinity of a portion where the pipe 17 is connected to each cell stack 10. The reason for this is as follows. The temperature of an electrolyte is usually the highest immediately after the electrolyte is discharged from each cell stack 10. Therefore, of the pipe 17 serving as the return path, in particular, in the vicinity of the portion connected to the cell stack 10, it is easy to secure a large difference between the temperature of the electrolyte and the temperature of the external environment. Accordingly, a heat exchanger 4 provided in the vicinity of the connecting portion enables the electrolyte to be efficiently cooled. Figure 1 illustrates an example of a case where the heat exchanger 4 is provided at a position of the pipe 17 serving as the return path, the position being close to portions connected to the cell stacks 10 (portions 170 and 171 near discharge).

The heat exchanger 4 is provided above the stack group 100. Since a plurality of cell stacks 10 are arranged side by side, there is a space above the stack group 100, the space having a virtual planar area corresponding to the total of the top surfaces of the plurality of cell stacks 10. This virtual planar area is larger than that in the case of the above-described vertical stacking by an area corresponding to the number of the cell stacks 10. Accordingly, when the above-described upper space is used as a space for disposing the heat exchanger 4, it is possible to dispose a heat exchanger 4 having a large planar area, that is, a heat exchanger 4 having a high cooling performance. By arranging the plurality of cell stacks 10 side by side, the lengths of the pipes 16 and 17 to be connected are easily shortened compared with the case of the vertical stacking, and a large space for installing the heat exchanger 4 is easily secured. This also enables a large heat exchanger 4 to be provided. In addition, when the stack group 100 and the heat exchanger 4 are seen through in the stacking direction thereof (up-down direction), the planar area of the heat exchanger 4 may be adjusted such that the heat exchanger 4 is located within the planar area of the stack group 100. In such a case, even the arrangement of a large heat exchanger 4 does not substantially cause an increase in the installation space due to the arrangement of the heat exchanger 4. In the case of the independent form described above, for example, the planar areas of the heat exchangers 4 may be adjusted such that the planar area when the heat exchanger 4 for a positive electrode and the heat exchanger 4 for a negative electrode are arranged side by side is within the planar area of the stack group 100. In such a case, an increase in the installation space due to the arrangement of the heat exchangers 4 is not substantially caused.

As illustrated in Fig. 1 as an example, when the positive and negative circulation paths are arranged in the rising form and the heat exchanger 4 is disposed on the portions 170 and 171 of the pipe 17 of the return path, the portions 170 and 171 being located near discharge, the pipe structure of the return path is easily made simple. In the rising form, since the positive electrolyte and the negative electrolyte in each cell stack 10 flow upward, the positive electrolyte and the negative electrolyte immediately after discharged from the cell stack 10 are directed upward. Accordingly, when the heat exchanger 4 is provided above the stack group 100 and on the portions 170 and 171 near discharge, the positive electrolyte and the negative electrolyte discharged from each cell stack 10 can be easily introduced into the heat exchanger 4 located above the stack group 100. In this case, since the pipe 17 of the return path can be provided such that the electrolytes flow upward or in the horizontal direction, the pipe structure of the return path, in particular, the pipe structure between each cell stack 10 and the heat exchanger 4 is easily made simple. Figure 1 illustrates an example of a case where electrolytes are allowed to flow from the top end of each cell stack 10 and the top end of the heat exchanger 4 in the upward direction. Alternatively, portions where the electrolytes are allowed to flow in the horizontal direction may be provided. With regard to pipes through which the positive electrolyte and the negative electrolyte that are discharged from the heat exchanger 4 flow toward the tanks 34 and 35, respectively, it is not necessary to provide a section in which an electrolyte flows from the upward direction to the downward direction. Therefore, an exhaust valve necessary in the case where an electrolyte flows from the upward direction to the downward direction can be omitted. This also enables the pipe structure of the return path to be easily made simple.

If, in the case of the rising form, the heat exchanger 4 is provided on the return path but is arranged, for example, side by side instead of being arranged above the stack group 100, the pipe 17 of the return path also has a section in which an electrolyte flows from the upward direction to the downward direction. Therefore, it is necessary to provide an exhaust valve, and thus the pipe structure of the return path tends to become complex.

### (Use)

The RF battery 1A of Embodiment 1 can be used as a storage battery, with respect to natural energy power generation, such as solar power generation or wind power generation, for the purpose of stabilizing fluctuation of power output, storing generated power during oversupply, leveling load, and the like. Furthermore, the RF battery 1A of Embodiment 1 can be additionally placed in an ordinary power plant and used as a storage battery as countermeasures against voltage sag/power failure and for the purpose of leveling load.

### (Main Advantages)

Since the RF battery 1A of Embodiment 1 includes a plurality of cell stacks 10 that are arranged side by side, the number of members used for constituting a base is easily reduced compared with the case of the vertical stacking. In addition, since the cell stacks 10, which are heavy objects, are disposed in a lower part and the heat exchanger 4 is disposed above the stack group 100, the degree of reinforcement of the base is easily decreased compared with the case where the heat exchanger 4 is disposed below the stack group 100. This configuration also easily reduces the number of members used for constituting the base. Therefore, according to the RF battery 1A, the time taken for assembling the base can be reduced, and the RF battery 1A has good assembly workability including the assembly of the base. In particular, even in the case where the RF battery 1A includes cell stacks 10 having large electrodes or cell stacks 10 each having a large number of cells, and the cell stacks 10 each have a heavier weight, the time taken for assembling the base is easily reduced, and the burden on the worker can be effectively reduced compared with the case of the vertical stacking.

In addition, since the RF battery 1A of Embodiment 1 includes the heat exchanger 4 and can efficiently cool an electrolyte, the RF battery 1A also has a good heat dissipation performance. In the RF battery 1A, since the space above the stack group 100 functions as a region where the heat exchanger 4 is disposed, a wide installation space of the heat exchanger 4 is easily secured compared with the case of the vertical stacking. In addition, since the pipes 16 and 17 are easily shortened compared with the case of the vertical stacking, a wide installation space of the heat exchanger 4 is easily secured. Therefore, the RF battery 1A can include a large heat exchanger 4 having a high cooling performance and thus has a better heat dissipation performance. Furthermore, even when the RF battery 1A includes a large heat exchanger 4, the installation space of the stack group 100 and the installation space of the heat exchanger 4 overlap. This configuration easily reduces an increase in the installation space due to the arrangement of the heat exchanger 4 or does not substantially cause an increase in the installation space.

As in this example, when the positive and negative circulation paths are arranged in the rising form, and the heat exchanger 4 is provided on the portions 170 and 171 of the pipe 17 of the return path, the portions 170 and 171 being located near discharge, the pipe structure of the return path is easily made simple as described above. In this case, it is not necessary to provide a section in which an electrolyte flows from the upward direction to the downward direction, and an exhaust valve can be omitted as described above. This also enables the pipe structure of the return path to be easily made simple. Therefore, the pipes 16 and 17 are easily assembled, and better assembly workability including the assembly of the pipes 16 and 17 is achieved. In addition, the electrolytes at high temperatures are introduced from the portions 170 and 171 near discharge into the heat exchanger 4 and can be efficiently cooled, and thus a better heat dissipation performance is achieved.

### [Embodiment 2] - present invention

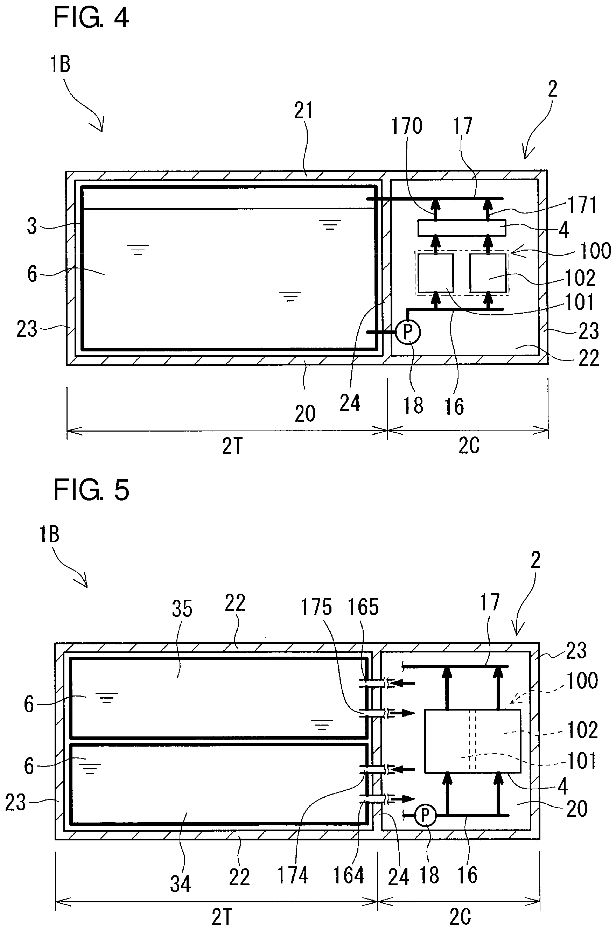

Hereafter, an RF battery 1B of Embodiment 2 will be described mainly with reference to Figs. 4 to 8.

Figure 4 is a longitudinal sectional view of a container 2 cut in a plane orthogonal to a width direction thereof and illustrates the internal structure in a simplified manner.

Figure 5 is a horizontal sectional view of the container 2 cut in a plane orthogonal to a height direction thereof and illustrates the internal structure in a simplified manner.

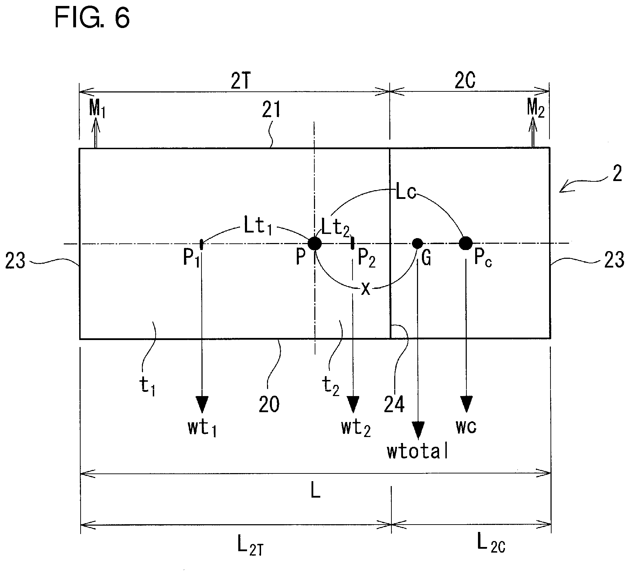

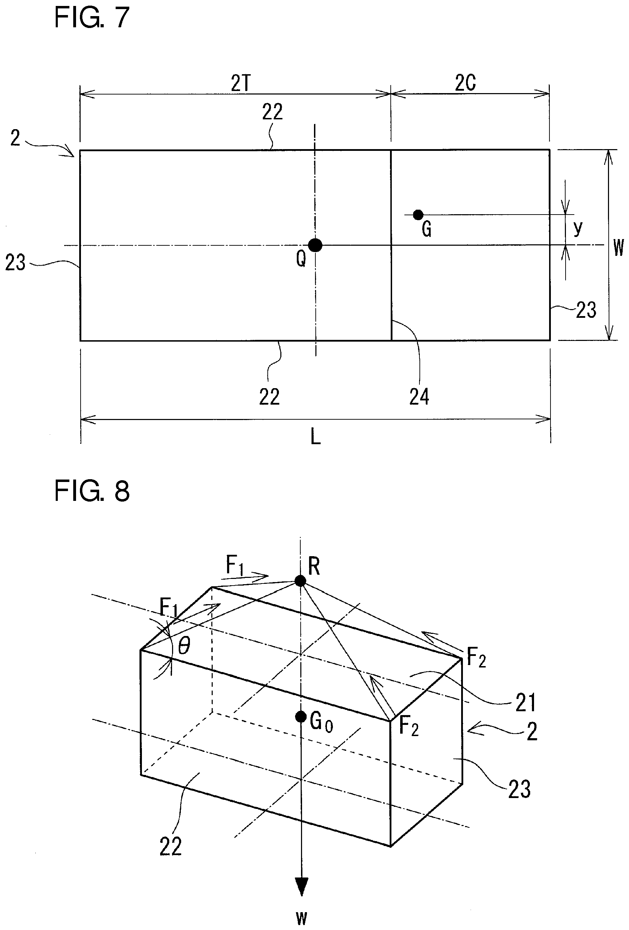

Figure 6 is a longitudinal sectional view of the container 2, Fig. 7 is a horizontal sectional view of the container 2, Fig. 8 is a perspective view of the container 2, and in each of these figures, the container 2 is schematically illustrated and the internal structure
thereof is omitted.

The basic configuration of the RF battery 1B of Embodiment 2 is the same as that of the RF battery 1A of Embodiment 1. Specifically, the RF battery 1B includes a stack group 100, a heat exchanger 4 disposed above the stack group 100, a tank 3 (a positive electrolyte tank 34 and a negative electrolyte tank 35, Fig. 5) that stores an electrolyte 6, cell stacks 10 (cell stacks 101 and 102 in this embodiment), and pipes 16 and 17 which are connected to the tanks 3 and through which the electrolyte flows. The RF battery 1B of Embodiment 2 further includes a container 2 that collectively houses the stack group 100, the heat exchanger 4, the tank 3, and the pipes 16 and 17. A main difference from Embodiment 1 lies in that the RF battery 1B of Embodiment 2 includes this container 2.

Hereafter, regarding Embodiment 2, the difference from Embodiment 1 will be described in detail, and a detailed description of configurations and advantages thereof that are common to those in Embodiment 1 is omitted.

For the sake of convenience of description, Fig. 4 illustrates a single tank 3, a single pipe 16 serving as an outward path, a single pipe 17 serving as a return path, and a single pump 18. In reality, as described in Embodiment 1, a tank 34, pipes 164 and 174, and a pump 184 for a positive electrode, and a tank 35, pipes 165 and 175, and a pump 185 for a negative electrode are provided. This similarly applies to Fig. 5. Hereinafter, the tanks, the pipes, and the pumps may be collectively referred to as a tank 3, pipes 16 and 17, and a pump 18, respectively.

### (Container)

The container 2 is typically a dry container used for, for example, transporting general cargo. The shape of the container 2 is typically a rectangular parallelepiped, in particular, a rectangular parallelepiped that is horizontally long in the installation state (the lower side of the sheet of Fig. 4 corresponds to the installation surface side) as illustrated in Fig. 4 as an example. An example of the container 2 has a rectangular bottom portion 20 that forms an installation part, a rectangular top plate portion 21 disposed to be opposite to the bottom portion 20, a pair of side surface portions 22 that connect the long sides of the bottom portion 20 to the corresponding long sides of the top plate portion 21 (refer to Fig. 5, only a side surface portion 22 on the inside of the sheet is seen in Fig. 4), and a pair of end surface portions 23 that connect the short sides of the bottom portion 20 to the corresponding short sides of the top plate portion 21. The container 2 may include an openable and closable door (not illustrated) on, for example, an end surface portion 23 or a side surface portion 22. The door is opened as required to adjust operating conditions of the RF battery 1B and to inspect the components of the RF battery 1B. Herein, in the installation state of the container 2, a dimension of the container 2 in the longitudinal direction is referred to as a length, a direction that is orthogonal to the longitudinal direction and that is directed from the bottom portion 20 toward the top plate portion 21 is referred to as a height direction, a dimension in the height direction is referred to as a height, a direction that is orthogonal to the longitudinal direction and that is directed from one of the side surface portions 22 toward the other side surface portion 22 is referred to as a width direction, and a dimension in the width direction is referred to as a width.

The size of the container 2 can be appropriately selected in accordance with the dimensions and the like of the components to be housed. Examples of the container 2 that can be used include international maritime cargo containers in accordance with ISO standards (for example, ISO 1496-1: 2013, etc.), and typically, 20 feet containers, 40 feet containers, and 45 feet containers; and 20 feet high-cube containers, 40 feet high-cube containers, and 45 feet high-cube containers, all of which have larger heights than those of the above corresponding containers. A large vessel such as the container 2 can house, for example, a stack group 100 in which a plurality of cell stacks 10 are arranged side by side, and furthermore, a stack group 100 including a large cell stack 10, and thus a high-output battery is easily obtained. Examples of the constituent material of the container 2 include metals such as steels (for example, rolled steel for general structure SS400). When constitutional members of the container 2 are made of metals, regions that can come in contact with an electrolyte, for example, at least inner surfaces of a tank chamber 2T (described later) preferably have a covering layer formed of a resin that does not react with an electrolyte and has resistance to an electrolyte (refer to Embodiment 1), an acid-resistant coating, plating (for example, a metal such as a noble metal, nickel, or chromium), or the like. More preferably, the entire inner surface (including a partition portion 24 described later) of the container 2 has a covering layer.

The container 2 of this example includes a partition portion 24 that divides the internal space that is horizontally long into two sections in the longitudinal direction of the container 2. One of the sections on one end surface portion 23 side (the right side in Fig. 4) is referred to as a cell chamber 2C, and the other section on the other end surface portion 23 side (the left side, the same) is referred to as a tank chamber 2T. That is, in the container 2, the cell chamber 2C and the tank chamber 2T are arranged side by side in the longitudinal direction of the container. The cell chamber 2C houses the pipes 16 and 17 including the stack group 100, the heat exchanger 4, and the pump 18. The tank chamber 2T houses the tank 3. In a form in which the stack group 100, the heat exchanger 4, and the pipes 16 and 17 are collectively housed on the one end side of the container 2 in the longitudinal direction and the tank 3 is housed on the other end side (hereinafter referred to as a "side form"), the arrange structure of the pipes 16 and 17 between each of the cell stacks 10 and the tank 3 is easily made simple, and the pipes 16 and 17 are easily shortened compared with, for example, a tank interposition form in which the stack group 100 and part of the pipes 16 and 17 are arranged on one end side and the pump 18, the remaining part of the pipes 16 and 17, the heat exchanger 4, etc. are arranged on the other end side with the tank 3 therebetween. Therefore, for example, the connecting operation between each of the cell stacks 10 and the pipes 16 and 17 and installation of the heat exchanger 4 are easily performed. In addition, the stack group 100 and the heat exchanger 4 are easily arranged close to each other, and thus electrolytes can be efficiently cooled.

The partition portion 24 of this example is a rectangular plate that is vertically arranged so as to extend from the bottom portion 20, and that has such a height that the upper end of the plate reaches the top plate portion 21 and a width extending from one of the side surface portions 22 to the other side surface portion 22. The partition portion 24 has a size and a shape that are close to those of the virtual planar area of the end surface portion 23. This partition portion 24 easily holds the shape of the tank 3 even when the tank 3 is formed of a flexible material such as rubber. When the partition portion 24 has insertion holes in which the pipes 16 and 17 connected to the tank 3 are inserted, electrolytes can be allowed to flow between the tank chamber 2T and the cell chamber 2C. The shape, the size, and the like of the partition portion 24 can be appropriately changed. At least a part of the partition portion 24 may be omitted. When the height of the partition portion 24 extending from the inner surface of the bottom portion 20 is, for example, lower than the positions of portions connected to the pipes 16 and 17 in the tank 3, the insertion holes need not be provided.

The partition portion 24 is provided such that the cell chamber 2C and the tank chamber 2T have desired volumes. In this example, the partition portion 24 is disposed at a position at which the volume of the tank chamber 2T is about double the volume of the cell chamber 2C. However, the position of the partition portion 24 can be appropriately changed. For example, the volume of the tank chamber 2T and the volume of the cell chamber 2C may be substantially equal to each other. Alternatively, the cell chamber 2C may be larger (the tank chamber 2T may be smaller) than the above. A large tank chamber 2T enables the amounts of electrolytes to increase to provide a large-capacity battery.

Regarding the side form described above, when the container 2 that has housed the components is lifted by a crane or the like during installation of the RF battery 1B, the container 2 may be inclined, which may result in difficulty in the placement of the bottom portion 20 on a predetermined installation location. Accordingly, for example, a volume distribution ratio of the cell chamber 2C and the tank chamber 2T, the masses of objects (including other members described later) housed in the cell chamber 2C, arrangement positions of the objects in the cell chamber 2C, and the mass of the tank 3 are preferably adjusted in consideration of the weight balance so that the container 2 is not inclined, and preferably, the bottom portion 20 is horizontally maintained during lifting.

Hereafter, the volume of the tank chamber 2T is assumed to be larger than the volume of the cell chamber 2C, and a length L_{2T} of the tank chamber 2T is assumed to be longer than a length L_{2C} of the cell chamber 2C. As illustrated in Figs. 6 and 7, a center of the container 2 in the longitudinal direction and the height direction is denoted by P (Fig. 6), a center of the container 2 in the longitudinal direction and the width direction is denoted by Q (Fig. 7), a length of the container 2 is denoted by L, a width of the container 2 is denoted by W (Fig. 7), and a center of gravity of the container 2 is denoted by G. As illustrated in Fig. 6, a region extending from the center P to the end surface portion 23 on the left side of the container 2 is defined as a large region t₁ of the tank chamber 2T, and, in the region extending from the center P to the end surface portion 23 on the right side of the container 2, a region extending to the partition portion 24 is defined as a small region t₂ of the tank chamber 2T and the remaining region is defined as a cell chamber 2C. On a longitudinal section in a state in which the stack group 100, the heat exchanger 4, the tank 3, and the pipes 16 and 17 are housed in the container 2 (Fig. 4, etc.), a mass of the large region t₁ of the tank chamber 2T is denoted by wt₁, and a distance from the center P to a center of gravity (point P₁) of the large region t₁ is denoted by Lt₁. A mass of the small region t₂ of the tank chamber 2T is denoted by wt₂, and a distance from the center P to a center of gravity (point P₂) of the small region t₂ is denoted by Lt₂. A mass of the cell chamber 2C is denoted by wc, and a distance from the center P to a center of gravity (point Pc) of the cell chamber 2C is denoted by Lc. In this case, in the container 2 in the state in which the stack group 100 and other components are housed, when a distance from the center P to the center of gravity G is denoted by x, a formula of the moment around the center of gravity G is represented by wt₁ × (Lt₁ + x) + wt₂ × (x - Lt₂) = wc × (Lc - x). Accordingly, x = (wc × Lc - wt₁ × Lt₁ + wt₂ × Lt₂)/(wc + wt₁ + wt₂).

Here, a rectangular parallelepiped container 2 having a center of gravity G₀ thereof at the center of the rectangular parallelepiped (the intersection point of a center line in the longitudinal direction, a center line in the width direction, and a center line in the height direction) is assumed to be lifted in a direction of a straight line passing through the center of gravity G₀ in a state in which wires are attached to four corners of a top plate portion 21 of the container 2, as illustrated in Fig. 8. Here, a lifting point R is an intersection point of a straight line that passes through the center of gravity G₀ and that is perpendicular to the top plate portion 21 and straight lines along the corresponding wires, the straight lines inclined at an angle of θ with respect to the top plate portion 21. In this case, tensions of the wires are equal to each other. When a tension on the left side is denoted by F₁, a tension on the right side is denoted by F₂, and a mass of the container is denoted by w, F₁ = F₂ = (1/4) × (1/sinθ) × w × acceleration of gravity. When the center of gravity G₀ of the container 2 is shifted to one side (the right side in Fig. 6), the balance between the tensions F₁ and F₂ changes. Even if, in this manner, the position of the gravity of the rectangular parallelepiped container 2 is shifted from the center of the longitudinal section of the container 2 to one end or the other end in the longitudinal direction, it is desirable to adjust the weight balance of the container 2 so as to safely lift the container 2.

As illustrated in Fig. 6, in the case where one end and the other end of the top plate portion 21 of the container 2 in the longitudinal direction are lifted with force M₁ and force M₂, respectively, a formula of the moment around the center of gravity G is represented by M₁ × [(1/2) × L + x] = M₂ × [(1/2) × L - x]. Accordingly, M₁ = {[(1/2) × L - x]/[(1/2) × L + x]} × M₂. A formula x = (1/2) × L to (1/20) × L is substituted, and a ratio F₁:F₂ of the tensions F₁ and F₂ is determined from a ratio M₁:M₂ of M₁ and M₂. On the basis of this ratio of the tension, the eccentricity ratio is +100% to +10% when the position of the center of gravity is shifted from G₀ to G. For example, when x = (1/3) × L, M₁:M₂ = (1/5):1. When this ratio is used, the denominator that satisfies 2 × F₁ + 2 × F₂ = 1 is 12. Accordingly, F₁:F₂ = (1/12):(5/12). In this case, Δ(F₂ - F₁) × 2 = 2/3, and thus the eccentricity ratio when x = (1/3) × L is +66.7%. The eccentricity ratio decreases with a decrease in the value of x. Here, when the eccentricity ratio is less than 70%, the lifting can be safely performed. Therefore, the weight balance of the container 2 is preferably adjusted so as to satisfy x ≤ (1/3) × L. When x ≤ (1/4) × L (eccentricity ratio: 50% or less) is satisfied, and furthermore, x ≤ (1/6) × L (eccentricity ratio: 33% or less) is satisfied, the weight balance is better, and the container 2 can be lifted more stably.

In the case where, before the installation of the RF battery 1B, the RF battery 1B is transported to an installation site in a state in which the tank 3 is empty without storing an electrolyte 6, and the electrolyte 6 is then stored in the tank 3 after the installation, the weight of the RF battery 1A during transportation can be reduced to easily perform the transportation and installation operation. In this case, the mass on the tank chamber 2T side tends to be smaller than the mass on the cell chamber 2C side on which components such as the stack group 100, which is a heavy object, is housed. Accordingly, the mass of each of the components, the arrangement positions of the components in the longitudinal direction, and the like are preferably adjusted so as to satisfy x ≤ (1/3) × L as described above in view of good installation workability.

In the tank interposition form described above, the weight balance on the longitudinal section tends to be easily achieved when, for example, the tank 3 is housed in the container 2 such that the center of the tank 3 overlaps the center of the container 2 in the longitudinal direction, and the stack group 100 is housed on one end side of the container 2 and the pipes 16 and 17 including the pump 18, the heat exchanger 4, etc. are housed on the other end side so as to sandwich the tank 3.

In each of the side form and the tank interposition form, when the position of the center of gravity of the container 2 is shifted from the center of the horizontal section of the container 2 to the left side or the right side, it is preferable to adjust the weight balance on the horizontal section of the container 2. This adjustment of the weight balance is preferably performed such that when the container 2 is transported on land by a vehicle such as a truck, the truck or the like is not turned over by the centrifugal force on a curve of a road. Specifically, the weight balance is preferably adjusted such that an unbalanced load is within 10%. As illustrated in Fig. 7, on a horizontal section of the container 2, a distance from the center Q to the center of gravity G is denoted by y. The distance x is replaced by the distance y, and the length L is replaced by the width W as in the above method for determining the eccentricity ratio on the longitudinal section. In this case, in order to satisfy an unbalanced load of 10% or less, the weight balance of the container 2 is preferably adjusted so as to satisfy y ≤ (1/20) × W. When y ≤ (1/25) ×W (unbalanced load: 8% or less) is satisfied, and furthermore, y ≤ (1/30) × W (unbalanced load: 6.7% or less) is satisfied, the weight balance is better, and the container 2 can be lifted more stably.

Furthermore, in the container 2, a heat insulating material is preferably disposed in a region surrounding the tank 3 from the viewpoint of easily suppressing a change in the temperature of the electrolyte 6 in the tank 3, the change being due to the environment outside the container 2. The heat exchanger 4 may be provided on the pipe 17 of a return path so as to return the cooled electrolyte 6 to the tank 3. This configuration easily prevents thermal degradation of the electrolyte 6, the pipes 16 and 17, and the like. In this example, the heat insulating material may be disposed in a region where the tank chamber 2T is formed on the partition portion 24, the end surface portion 23 on the left side in Fig. 4, the bottom portion 20, the top plate portion 21, and the two side surface portions 22.

### (Tank)

When the tank 3 has a form conforming to the container 2, specifically, a rectangular parallelepiped form in this example, the volume of the tank 3 is increased to easily increase the amount of the electrolyte stored. The positive electrolyte tank 34 and the negative electrolyte tank 35 of this example are each a horizontally long rectangular parallelepiped and have the same size. The combination of the two tanks 34 and 35 has a form conforming to the inner peripheral form of the tank chamber 2T, and the size of the combination is substantially slightly smaller than the inner dimensions of the tank chamber 2T (Fig. 5). In this example, the two tanks 34 and 35 are housed side by side in the width direction of the container 2. In particular, a tank 3 formed of a flexible material such as rubber can be elastically deformed. Accordingly, even a tank 3 having a large volume is easily housed in the container 2. In addition, even if the internal pressure of the tank 3 varies, a stress due to the internal pressure is easily relaxed by elastic deformation.

In the case of the rising form, as illustrated in Fig. 4, a portion in the tank 3, the portion being connected to the pipe 16 of the outward path, may be provided in a lower portion of the tank 3 (close to the bottom portion 20 of the container 2 in Fig. 4), and a portion in the tank 3, the portion being connected to the pipe 17 of the return path, may be provided in an upper portion of the tank 3 (close to the top plate portion 21, the same).

### (Heat Exchanger)

The heat exchanger 4 is disposed above the stack group 100 as in Embodiment 1. Figure 5 illustrates an example of a state in which the stack group 100 is located below the heat exchanger 4, and the heat exchanger 4 and the stack group 100 overlap. As described in Embodiment 1, the planar area of the heat exchanger 4 corresponding to the virtual planar area of the stack group 100 enables a large heat exchanger 4 to be housed even in a region having a relatively small volume, for example, in the container 2, in particular, in the cell chamber 2C. In this example, the positive and negative circulation paths are arranged in the rising form, and the heat exchanger 4 is disposed on the portions 170 and 171 of the pipe 17 of the return path, the portions 170 and 171 being located near discharge.

### (Other Members Housed)

The container 2 can further house, for example, a control unit that controls a device or the like, such as the pump 18, relating to the circulation of an electrolyte in the circulation mechanism, and a ventilation mechanism of the tank 3 described below (both not illustrated).

The ventilation mechanism of the tank 3 includes, for example, a gas generator, a gas flow rate-adjusting mechanism, a backflow-preventing mechanism, and a pipe connected to the tank 3.

The gas generator generates a flow gas for ventilating the gas phase of the tank 3. In an RF battery, for example, a gas containing hydrogen element may be generated on the negative electrode due to a side reaction of the battery reaction or the like and accumulated in the gas phase of the negative electrolyte tank. Ventilation of, for example, the gas phase of the negative electrolyte tank 35 with a flow gas enables the hydrogen concentration in the gas phase of the negative electrolyte tank 35 to decrease and enables the gas to be released into the air. The flow gas preferably contains an inert gas or is substantially an inert gas. Examples of the inert gas include nitrogen and rare gases (argon, neon, and helium). The use of a gas generator capable of generating nitrogen enables nitrogen to be taken from the air, and thus the flow gas can be substantially permanently supplied.

The gas flow rate-adjusting mechanism adjusts the feed rate of the flow gas supplied from a gas supply source such as the gas generator to the gas phase of the tank 3. The gas flow rate-adjusting mechanism includes, for example, a flowmeter and a valve and adjusts the degree of opening of the valve on the basis of the flow rate of the flow gas measured with the flowmeter. The determination of the degree of opening based on the flow rate, the operation of the valve, etc. may be performed by the control unit.

The backflow-preventing mechanism is provided on a discharge pipe connected to the tank 3 and prevents the discharge gas from back-flowing in the gas phase of the tank 3. For example, a known water sealed valve or the like can be used as the backflow-preventing mechanism.

Examples of specific forms for ventilating the gas phase of the tank 3 with the flow gas include forms (1) and (2) in which the two tanks 34 and 35 are continuously ventilated, and a form (3) in which the tanks 34 and 35 are each independently ventilated. In the form (1) of positive electrolyte tank 34 → negative electrolyte tank 35 → discharge, the gas phases of the two tanks 34 and 35 are connected to each other through a communicating pipe, the gas generator is connected to the gas phase of the positive electrolyte tank 34, and a discharge pipe is connected to the gas phase of the negative electrolyte tank 35. A flow gas is introduced into the gas phase of the positive electrolyte tank 34, and the flow gas is supplied also to the gas phase of the negative electrolyte tank 35 through the positive electrolyte tank 34 and the communicating pipe and is discharged from the discharge pipe. One end of the discharge pipe may be connected to the tank 3, and the other end may be opened to the outside of the container 2 to discharge the flow gas to the air outside the container 2 or the flow gas may be discharged from a ventilation hole opened to the inside of the container 2 and provided in, for example, the side surface portion 22 of the container 2. In the form (2) of negative electrolyte tank 35 → positive electrolyte tank 34 → discharge, a communicating pipe is connected as in (1) above, a discharge pipe is connected to the gas phase of the positive electrolyte tank 34, and the gas generator is connected to the gas phase of the negative electrolyte tank 35, contrary to (1) above. The flow gas is introduced into the gas phase of the negative electrolyte tank 35, and the flow gas is supplied to the gas phase of the positive electrolyte tank 34 through the communicating pipe and the gas phase of the negative electrolyte tank 35 and is discharged. In the form (3), the gas generator and the discharge pipe are connected to each of the gas phases of the tanks 34 and 35, and a flow gas is introduced into the gas phases of the tanks 34 and 35 and is discharged.

### (Main Advantages)

In the RF battery 1B of Embodiment 2, the stack group 100, the tank 3, the heat exchanger 4, and the pipes 16 and 17 are collectively housed in the container 2. Accordingly, the RF battery 1B can be assembled in a place where a large working space is easily secured, such as a factory, and has better assembly workability. In the case where one end side of the container 2 in the longitudinal direction functions as a cell chamber 2C, and the stack group 100, the heat exchanger 4, and the pipes 16 and 17 are housed in the cell chamber 2C as in this example, the pipe structure is easily made simple, and the pipes 16 and 17 are easily shortened compared with the tank interposition form described above. Accordingly, the time taken for assembling the pipes 16 and 17, the time taken for installing the heat exchanger 4, and the like can also be reduced, and better assembly workability is provided.

In addition, the RF battery 1B of Embodiment 2 includes the heat exchanger 4 above the stack group 100, while the stack group 100 is collectively housed in the container 2. Accordingly, the RF battery 1B of Embodiment 2 has good heat dissipation performance as in Embodiment 1. Since the pipes 16 and 17 are easily shortened, a large installation space of the heat exchanger 4 is easily secured. Since a large heat exchanger 4 can be provided, a good heat dissipation performance is realized. Even in the case where the stack group 100 is housed in a relatively narrow space, such as the cell chamber 2C, as in this example, a relatively large flow space of the air is easily secured compared with the case of the vertical stacking, and it is expected that the pipes 16 and 17 are easily air-cooled by flow of the air. This configuration also provides a good heat dissipation performance. Furthermore, in the case where the stack group 100, the heat exchanger 4, and the pipes 16 and 17 are housed in the cell chamber 2C as in this example, and the pipes 16 and 17 are short as described above, an electrolyte is easily rapidly introduced into the heat exchanger 4, and the electrolyte can be efficiently cooled. This configuration also provides a good heat dissipation performance. Furthermore, as in this example, when the positive and negative circulation paths are arranged in the rising form, and the heat exchanger 4 is arranged on the portions 170 and 171 near discharge, electrolytes at high temperatures can be rapidly introduced into the heat exchanger 4 and efficiently cooled. This configuration also provides a good heat dissipation performance.

In addition, the adjustment of the masses, the arrangement positions in the longitudinal direction, and the arrangement positions in the width direction of the stack group 100, the pipes 16 and 17, and the tank 3 in consideration of the weight balance as described above enables the container 2 to be stably lifted by a crane or the like when the container 2 that has housed the above components is placed on an installation location. During the transportation of the container 2 that has housed the above components by a truck or the like, the truck or the like can travel stably. Therefore, good installation workability and good transportation workability are also provided.

Furthermore, the RF battery 1B achieves the advantages described below.
(1) Since the components such as the stack group 100, the tank 3, and the pipes 16 and 17 are collectively housed in the single container 2, the RF battery 1B is advantageous in that the transportation is easily performed, the installation is easily performed, and the components can be protected by the container 2.
(2) Since the inside of the container 2 is divided into the cell chamber 2C and the tank chamber 2T, for example, the inspection of the cell stacks 10, the pump 18, the control unit, and other components is easily performed.

The present invention is not limited to the examples described above. The scope of the present invention is defined by the appended claims.

For example, in Figs. 1, 4, and 5, the number of stacks, the circulation paths, etc. may be changed. In Figs. 4 and 5, the arrangement of the objects housed in the container 2 may be changed, and the partition portion 24 may be omitted.

A container that mainly houses the stack group 100 and a container that mainly houses the tank 3 may be containers that are independent from each other.

For example, an RF battery may include an apparatus container that houses the stack group 100, the heat exchanger 4, the pipes 16 and 17, etc. and that does not house the tank 3, and a tank container that houses the tank and that does not house the stack group 100. The apparatus container and the tank container that are separated from each other enable the number of the stacks to be easily further increased. Regarding the tank container, it is possible to use a form in which the positive and negative tanks 34 and 35 are collectively housed, and a form including a positive electrode container that houses the positive electrolyte tank 34 and a negative electrode container that houses the negative electrolyte tank 35.

### Reference Signs List

- 1A, 1B: redox flow battery (RF battery)
- 10C: battery cell
- 11: membrane
- 14: positive electrode
- 15: negative electrode
- 16, 17, 164, 165, 174, 175: pipe
- 170, 171: portion near discharge
- 18, 184, 185: pump
- 100: stack group
- 10, 101, 102: cell stack
- 110: cell frame
- 111: bipolar plate
- 112: frame body
- 113: liquid supply hole
- 114, 116: slit
- 115: liquid discharge hole
- 118: sealing member
- 120: sub-cell stack
- 122: supply/discharge plate
- 130: end plate
- 132: fastening member
- 2: container
- 2C: cell chamber
- 2T: tank chamber
- 20: bottom portion
- 21: top plate portion
- 22: side surface portion
- 23: end surface portion
- 24: partition portion
- 3: tank
- 34: positive electrolyte tank
- 35: negative electrolyte tank
- 4: heat exchanger
- 40: pipe accumulation part
- 42: cooling mechanism
- 6: electrolyte
- t₁: large region
- t₂: small region

## Claims

1. A redox flow battery (1A, 1B) comprising:
a stack group (100) including a plurality of cell stacks (10, 101, 102) that are arranged side by side in a horizontal direction;
a heat exchanger (4) that is disposed above the stack group (100) and that cools an electrolyte (6) supplied to each of the cell stacks (10, 101, 102); and
a container (2) that collectively houses the stack group (100), the heat exchanger (4), a tank (3) that stores the electrolyte (6), and a pipe (16, 164, 165) which is connected to each of the cell stacks (10, 101, 102) and the tank (3) and through which the electrolyte (6) flows,
wherein the container (2) includes a cell chamber (2C) that houses the stack group (100), the heat exchanger (4), and the pipe (16, 164, 165) and a tank chamber (2T) that houses the tank (3), the cell chamber (2C) and the tank chamber (2T) being arranged side by side in a longitudinal direction of the container (2),
**characterized in that**:
a length of the tank chamber (2T) is longer than a length of the cell chamber (2C),
a center of the container (2) in the longitudinal direction and a height direction is denoted by P, a center of the container (2) in the longitudinal direction and a width direction is denoted by Q, a length of the container (2) is denoted by L, a width of the container (2) is denoted by W, and a center of gravity of the container (2) is denoted by G in a state in which the tank (3) is empty without storing the electrolyte (6), and
a distance x from the center P to the center of gravity G satisfies x ≤ (1/3) × L on a longitudinal section of the container (2) in a state in which the stack group (100), the heat exchanger (4), the tank (3), and the pipe (16, 164, 165) are housed, and a distance y from the center Q to the center of gravity G satisfies y ≤ (1/20) × W on a horizontal section of the container (2).

## Patentansprüche

1. Redox-Flow-Batterie (1A, 1B), umfassend:
eine Stapelgruppe (100), die mehrere Zellenstapel (10, 101, 102) in einer Anordnung seitlich nebeneinander in einer Horizontalrichtung beinhaltet;
einen Wärmetauscher (4), der über der Stapelgruppe (100) angeordnet ist und der ein Elektrolyt (6), das jedem der Zellenstapel (10, 101, 102) zugeleitet wird, kühlt; und
einen Behälter (2) zur kollektiven Unterbringung der Stapelgruppe (100), des Wärmetauschers (4), eines Tanks (3), der das Elektrolyt (6) speichert, und eines Rohres (16, 164, 165), das mit jedem der Zellenstapel (10, 101, 102) und dem Tank (3) verbunden ist und durch das das Elektrolyt (6) strömt,
wobei der Behälter (2) beinhaltet: eine Zellenkammer (2C) zur Unterbringung der Stapelgruppe (100), des Wärmetauschers (4) und des Rohres (16, 164, 165) und
eine Tankkammer (2T) zur Unterbringung des Tanks (3), wobei die Zellenkammer (2C) und die Tankkammer (2T) seitlich nebeneinander in einer Längsrichtung des Behälters (2) angeordnet sind,
**dadurch gekennzeichnet, dass**
eine Länge der Tankkammer (2T) größer als eine Länge der Zellenkammer (2C) ist, ein Zentrum des Behälters (2) in der Längsrichtung und einer Höhenrichtung mit P bezeichnet wird, ein Zentrum des Behälters (2) in der Längsrichtung und einer Breitenrichtung mit Q bezeichnet wird, eine Länge des Behälters (2) mit L bezeichnet wird, eine Breite des Behälters (2) mit W bezeichnet wird und ein Schwerpunkt des Behälters (2) in einem Zustand, in dem der Tank (3) leer ist und das Elektrolyt (6) nicht speichert, mit G bezeichnet wird, und ein Abstand x von dem Zentrum P zu dem Schwerpunkt G den Ausdruck x ≤ (1/3) × L in einem Längsabschnitt des Behälters (2) in einem Zustand, in dem die Stapelgruppe (100), der Wärmetauscher (4), der Tank (3) und das Rohr (16, 164, 165) untergebracht sind, erfüllt und ein Abstand y von dem Zentrum Q zu dem Schwerpunkt G den Ausdruck y ≤ (1/20) × W in einem Horizontalabschnitt des Behälters (2) erfüllt.

## Revendications

1. Batterie à flux redox (1A, 1B) comprenant:
un groupe d'empilements (100) incluant une pluralité d'empilements de cellules (10, 101, 102) qui sont disposés côte à côte dans une direction horizontale;
un échangeur de chaleur (4) qui est disposé au-dessus du groupe d'empilements (100) et qui refroidit un électrolyte (6) fourni à chacun des empilements de cellules (10, 101, 102); et
un récipient (2) qui reçoit collectivement le groupe d'empilements (100), l'échangeur de chaleur (4), un réservoir (3) qui stocke l'électrolyte (6) et un conduit (16, 164, 165) qui est relié à chacun des empilements de cellules (10, 101, 102) et au réservoir (3) et par lequel l'électrolyte (6) s'écoule,
dans lequel le récipient (2) inclut une chambre à cellules (2C) qui reçoit le groupe d'empilements (100), l'échangeur de chaleur (4), et le conduit (16, 164, 165), et une chambre à réservoir (2T) qui reçoit le réservoir (3), la chambre à cellules (2C) et la chambre à réservoir (2T) étant disposées côte à côte dans une direction longitudinale du récipient (2),
**caractérisée en ce que**:
une longueur de la chambre à réservoir (2T) est plus longue qu'une longueur de la chambre à cellules (2C),
un centre du récipient (2) dans la direction longitudinale et une direction de la hauteur est désigné par P, un centre du récipient (2) dans la direction longitudinale et une direction de la largeur est désigné par Q, une longueur du récipient (2) est désignée par L, une largeur du récipient (2) est désignée par W , et un centre de gravité du récipient (2) est désigné par G dans un état dans lequel le réservoir (3) est vide sans stocker l'électrolyte (6), et une distance x du centre P au centre de gravité G satisfait x ≤ (1/3) × L sur une coupe longitudinale du récipient (2) dans un état dans lequel le groupe d'empilements (100), l'échangeur de chaleur (4), le réservoir (3) et le conduit (16, 164, 165) sont reçus, et une distance y du centre Q au centre de gravité G satisfait y ≤ (1/20) × W sur une coupe horizontale du récipient (2).
